Europäisches Patentamt

European Patent Office

Office européen des brevets

(19)

(11) Veröffentlichungsnummer: **0 227 033**
**B1**

(12) **EUROPÄISCHE PATENTSCHRIFT**

(45) Veröffentlichungstag der Patentschrift: 20.06.90

(21) Anmeldenummer: 86117594.1

(22) Anmeldetag: 17.12.86

(51) Cl.⁵: **B 65 D 19/24, B 65 D 19/32**

(54) Palette aus Kunststoff.

(30) Priorität: 18.12.85 DE 8535530 u

(43) Veröffentlichungstag der Anmeldung:
01.07.87 Patentblatt 87/27

(45) Bekanntmachung des Hinweises auf die
Patenterteilung:
20.06.90 Patentblatt 90/25

(84) Benannte Vertragsstaaten:
AT BE CH DE ES FR GB GR IT LI LU NL SE

(56) Entgegenhaltungen:
AT-B- 331 704
DE-A-2 046 650
DE-A-2 713 674
DE-A-2 909 541
DE-U-8 113 916
US-A-3 664 271

(73) Patentinhaber: remaplan Anlagenbau GmbH
Unterhachinger Strasse 75
D-8000 München 83 (DE)

(72) Erfinder: Rüttnauer, Rochus C.
Leoprechtingstrasse 32
D-8000 München 83 (DE)

(74) Vertreter: Patentanwälte Dr. Solf & Zapf
Zeppelinstrasse 53
D-8000 München 80 (DE)

Courier Press, Leamington Spa, England.

# Beschreibung

Die Erfindung betrifft eine Palette nach dem Oberbegriff des Anspruchs 1.

Eine Palette dieser Art ist in der DE-A-2 909 541 beschrieben und zeichnerisch dargestellt. Bei dieser bekannten Ausgestaltung besteht die Palette aus einer gleichdicken Deckplatte und an deren Unterseite angeformten Füßen, wobei die Palette einteilig aus Kunststoff durch Spritzgießen hergestellt ist. Die Füße sind durch kreisringförmige, unten offene Hohlzylinder gebildet. Es sind im Durchmesser große und kleine Füße vorgesehen, wobei der Außendurchmesser der kleinen Füße etwas kleiner als der Innendurchmesser der großen Füße ist. Außerdem haben die Füße pro Reihe gleiche Achsabstände voneinander sowie gleiche Abstände vom Palettenrand, und die eine Reihe beginnt mit einem im Durchmesser großen Fuß, während am Anfang der anderen Reihe ein im Durchmesser kleiner Fuß angeordnet ist. Diese Ausgestaltung ermöglicht es, zwei Paletten mit einander zugewandten Unterseiten aneinanderzusetzen, wobei die kleinen Füße in die großen Füße einfassen. Durch diese Ausgestaltung lassen sich leere Paletten raumsparend stapeln.

Auf dem Transportsektor besteht ein immer stärkerer Bedarf nach preisgünstigen Paletten, die einerseits derart kostengünstig sein sollen, daß sie als Einweg-Palette verwendet werden können, und andererseits hinreichend stabil und zudem auch optisch ansprechend ausgebildet sein sollen, so daß sie auch als Display-Palette geeignet sind, und bei denen eine leichte Handhabung gewährleistet ist.

Der Erfindung liegt die Aufgabe zugrunde, eine Palette zu schaffen, die die vorstehenden Eigenschaften aufweist.

Diese Aufgabe wird durch die kennzeichnenden Merkmale des Anspruchs 1 gelöst.

Die erfindungsgemäße Verwendung von Recycling-Kunststoffmaterial zeichnet sich neben seinen guten mechanischen Eigenschaften insbesondere durch die besondere Wirtschaftlichkeit aus, da anstatt von hochwertigen, teuren Neukunststoffen lediglich Abfallkunststoffe in jeglicher Form wiederverwendet und verarbeitet werden. Auch benötigt die Herstellung der erfindungsgemäßen Palette aus dem Recycling-Kunststoff nur wenige Prozent der Energie, die zur Herstellung von Teilen aus Neukunststoffen erforderlich wären. Somit zeichnet sich die erfindungsgemäße Palette durch eine hohe Umweltfreundlichkeit aus. Durch die erfindungsgemäße konstruktive Ausgestaltung der Palette als Preßteil ergibt sich einerseits die Einstückigkeit von Deckplatte und Füßen und andererseits eine große Stabilität bzw. Verwindungssteifigkeit bei geringem Gewicht, wobei eine z.B. durchgehende, glatte Oberfläche erreichbar ist. Weiterhin kann durch die erfindungsgemäße Ausbildung die Verwendung von Nägeln oder Schrauben oder Schweißungen vollständig vermieden werden. Da das Oberteil der erfindungsgemäßen Palette als Preßteil ausgebildet ist, kann es in einem Arbeitsgang hergestellt werden, wodurch sich in Verbindung mit den hohen Stückzahlen geringe Fertigungskosten einstellen.

Vorteilhafte Weiterbildungen der Erfindung sind in den Unteransprüchen gekennzeichnet.

Anhand der in der Zeichnung dargestellten Ausführungsbeispiele wird die Erfindung im folgenden näher erläutert. Es zeigen:

Fig. 1 eine Aufsicht auf eine erfindungsgemäße Palette,

Fig. 2 eine Ansicht von unten auf die Palette gemäß Fig. 1,

Fig. 3 einen Schnitt entlang der Schnittlinie III-III in Fig. 1, in perspektivischer Darstellung,

Fig. 4 einen Querschnitt durch einen Teilbereich der Palette,

Fig. 5 eine Draufsicht auf eine andere Ausführungsform der Palette mit Kufe,

Fig. 6 eine Ansicht von einer Schmalseite der Palette mit Kufe,

Fig. 7 einen Schnitt entlang der Linie E-F-G-H in Fig. 5,

Fig. 8 einen Schnitt entlang der Linie A-B-C-D-E in Fig. 5,

Fig. 9 eine Unteransicht gemäß Pfeilrichtung I in Fig. 8 auf eine Hälfte der Palette mit Kufe,

Fig. 10 eine Unteransicht einer Kufe,

Fig. 11 eine Seitenansicht der Kufe,

Fig. 12 eine Draufsicht auf die Kufe,

Fig. 13 einen Querschnitt durch die Kufe entlang der Linie A-A in Fig. 12,

Fig. 14 eine Draufsicht auf einen Kufenrahmen,

Fig. 15 einen Teilbereich eines Fußes mit Abdeckplatte im Längsschnitt.

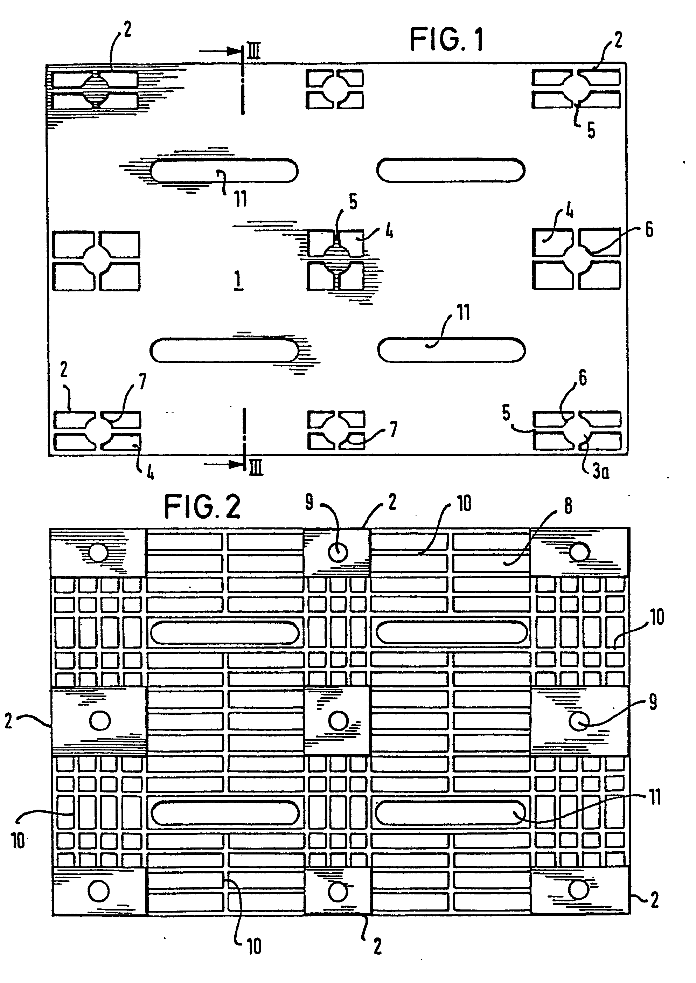

Wie sich aus Fig. 1 ergibt, besteht eine erfindungsgemäße Palette aus einer Deckplatte 1 aus Kunststoff, an deren Unterseite Füße 2 einstückig ausgebildet sind. Die erfindungsgemäße Palette ist als Kunststoff-Preßteil hergestellt, wobei die Füße aus einem Preßfortsatz der Deckplatte bestehen, der einen mittigen zur Fußunterseite offenen Hohlzylinder 3 aufweist. Der Hohlzylinder kann, wie im Ausführungsbeispiel dargestellt, symmetrisch von vier Kammern 4 umgeben sein, die zur Deckplatte 1 hin offen sind und im Mündungsbereich des Hohlzylinders 3 einen Boden 4a aufweisen und gegeneinander durch Wandstege 5 voneinander abgetrennt sind. Diese Kammern 4 weisen jeweils eine Innenwandung 6 im Bereich des Hohlzylinders 3 auf, wobei die Wandungen 6 die Wandung des Hohlzylinders 3 bilden. Die Außenwandungen 7 der Kammern 4 ergänzen sich zu einer Rechteckform bzw. zu einer Außenkontur eines Fußes 2. An ihrer Unterseite 8 sind somit die Füße 2 bis auf die Öffnung 9 des Hohlzylinders 3 vollständig geschlossen, so daß sich eine ebene Standfläche ergibt. Die Palette weist eine glatte Oberseite der Deckplatte 1 auf, wodurch sich die erfindungsgemäße Palette besonders leicht beladen und entladen läßt und sie besonders gut für derartige Güter geeignet ist, die eine absolut ebene Auflagefläche benötigen.

An der Unterseite der Deckplatte 1 sind Versteifungsstege 10 angeformt, die sowohl in Längsals auch in Querrichtung der erfindungsgemäßen Deckplatte 1 verlaufen. Sie sind vorzugsweise kürzer als die Länge der Füße 2 beträgt und dienen zur Erhöhung der Biegesteifigkeit. Die Anzahl und Anordnung sowie die Abmessungen sind optimiert, so daß sich durch die Ausbildung der Stege keine wesentliche Gewichtserhöhung ergibt, weil infolge der Anordnung der Stege die Deckplatte 1 selbst relativ dünn ausgebildet werden kann.

Um die Handhabung der erfindungsgemäßen Palette zu erleichtern, können in der Deckplatte Grifföffnungen 11 ausgebildet sein. Eine weitere Gewichtsreduzierung kann dadurch erfindungsgemäß erreicht werden, daß das verwendete Kunststoffmaterial als geschäumter Kunststoff ausgeführt ist.

Wie sich aus Fig. 2 ergibt, sind z.B. neun Füße 2 vorhanden, und zwar jeweils fluchtend an den Ecken der Deckplatte 1 sowie fluchtend in der Mitte der Längsund Querseiten sowie im Zentrum der Deckplatte 1 selbst. Dabei können die Füße alle mit gleichen Abmessungen ausgebildet sein, aber auch unterschiedlich, wie dies im dargestellten Ausführungsbeispiel der Fall ist. Wesentlich ist, daß die Füße derart angeordnet sind, daß sich durchgehende tunnelförmige Öffnungen ergeben, so daß die erfindungsgemäße Palette von allen vier Seiten her derart zugänig ist, daß Gabelstapler mit ihren Gabelarmen aus allen vier Richtungen unter die Palette fahren können.

Die Anzahl und die Dichte der Versteifungsstege auf der Unterseite der Palette wird den jeweiligen Festigkeitserfordernissen der Palette angepaßt, so daß die Ausbildung der Versteifungsstege auch an verschiedenen Bereichen der Unterseite unterschiedlich sein kann, wie dies im Ausführungsbeispiel dargestellt ist.

Die erfindungsgemäße Ausgestaltung der Füße 2 mit dem zur Unterseite offenen Hohlzylinder 3 ermöglicht auf besonders einfache Weise die Befestigung von Kufen 13 an der Unterseite der Palette bzw. der Füße 2, ohne daß hierdurch zusätzliche Befestigungsmittel erforderlich sind. Die Kufen 13 weisen zu diesem Zweck auf ihrer Oberseite Zapfen 14 auf, die durch die Öffnungen 9 in den Hohlzylinder 3 passend hineingesteckt werden können. Die Halterung der Kufen 13 kann z.B. durch einen Preßsitz gewährleistet werden. Mit einem Klebemittel zwischen einem Zapfen 14 und der Wandung des Hohlzylinders 3 kann zweckmäßigerweise eine unverlierbare Befestigung der Kufen erfolgen.

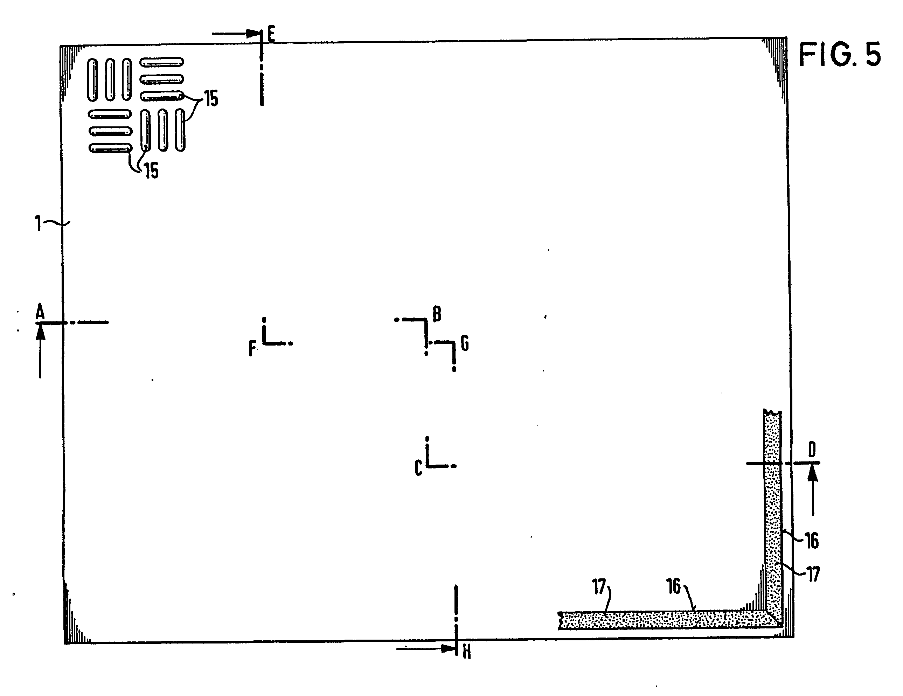

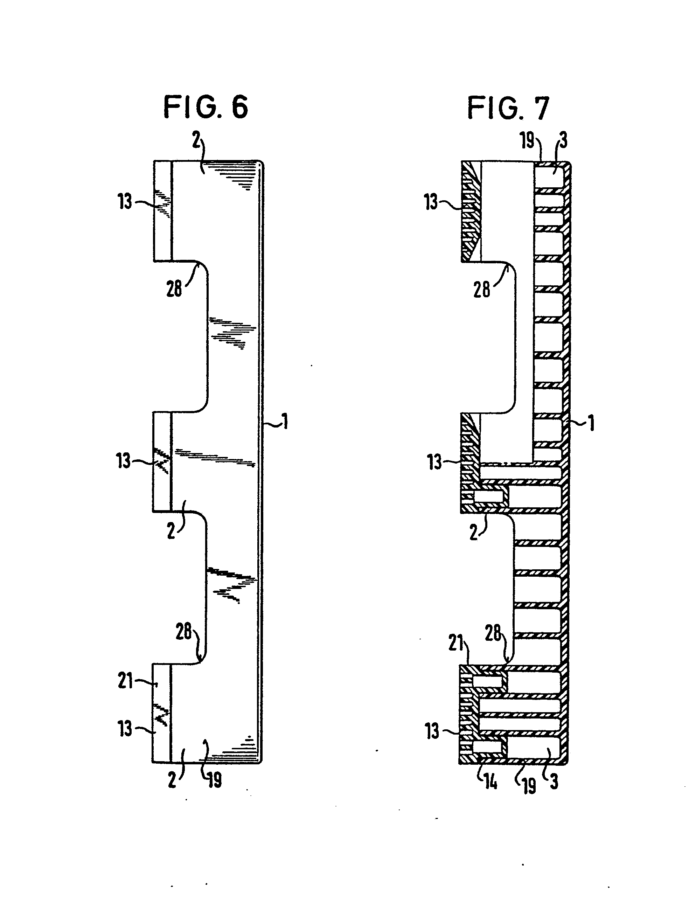

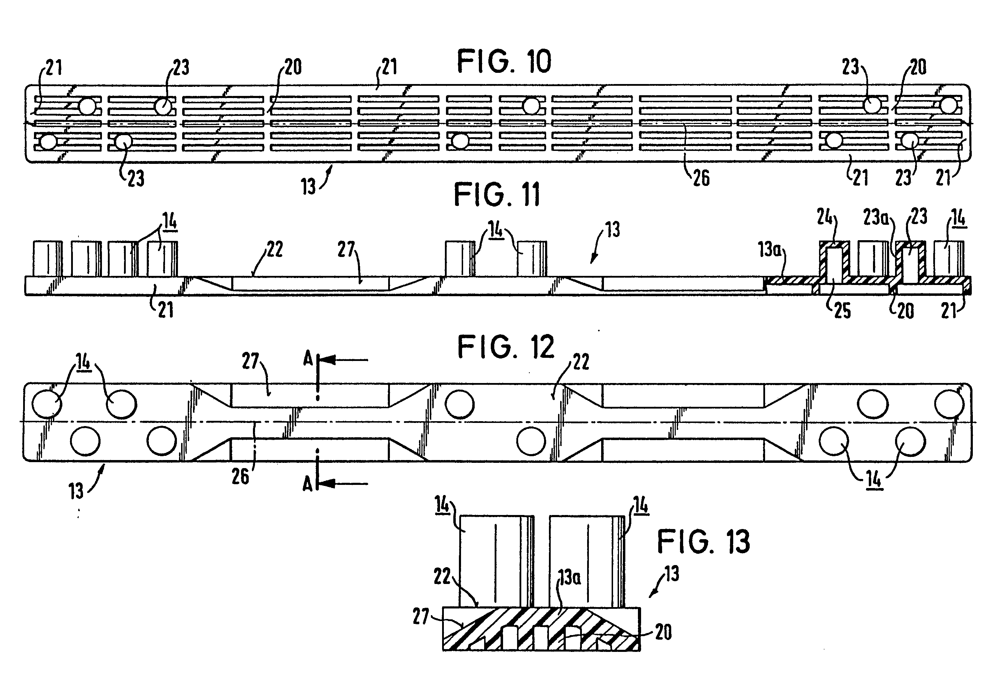

Die Fig. 5 bis 15 stellen besonders zweckmäßige Ausgestaltungen der erfindungsgemäßen Palette dar. Dabei ist die Deckplatte 1 der Palette ebenflächig durchgehend, d.h. ohne Durchbrüche oder Löcher ausgeführt.

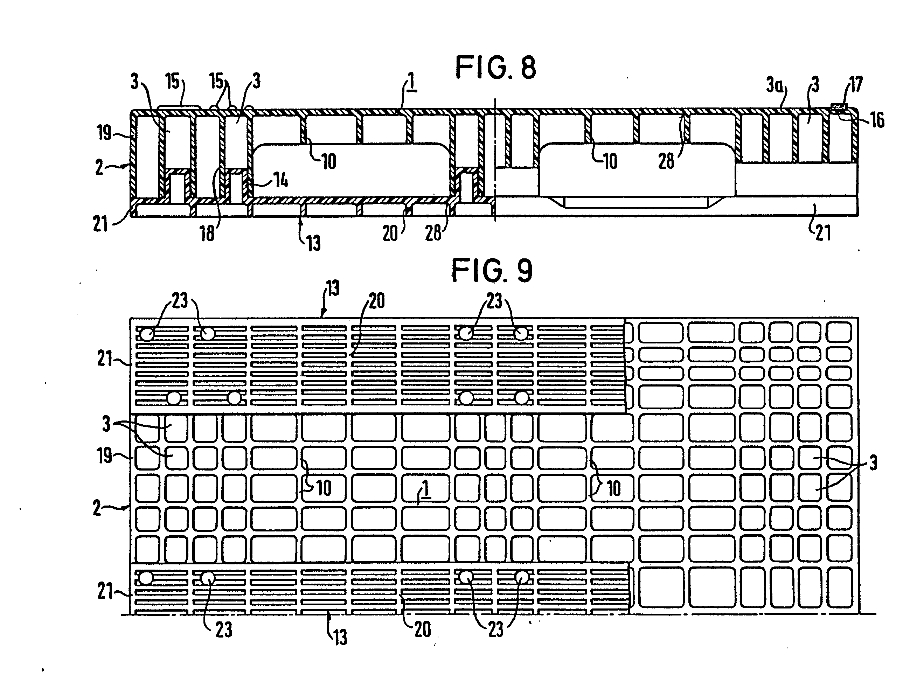

Zur Sicherung des Packgutes können zweckmäßigerweise an sich bekannte Noppen 15 oder dgl. reliefartige Erhebungen auf der Oberfläche der Deckplatte 1 angeordnet bzw. eingepreßt sein (nur teilbereichsweise in den Fig. 5 und 8 dargestellt). Es können zweckmäßigerweise alternativ oder zudem Rillen 16 insbesondere im Bereich der Außenkanten der Palette im Oberflächenbereich der Deckplatte 1 eingebracht sein, in denen eine Leiste 17 z.B. aus einem elastischen Material insbesondere aus Gummi sitzt (ebenfalls nur teilbereichsweise in den Fig. 5 und 8 dargestellt). Diese Leisten verhindern ein seitliches Abrutschen des Packgutes von der Palette.

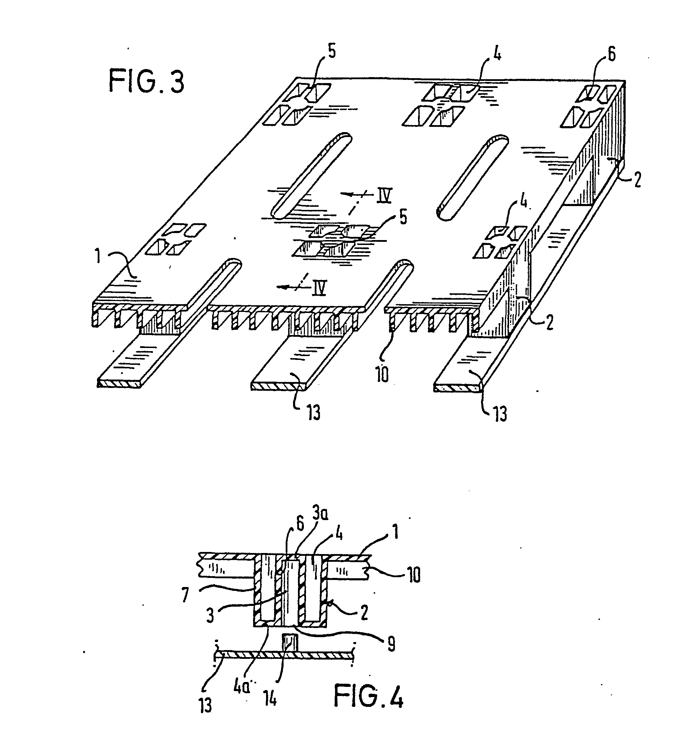

Bei der Ausführungsform der Palette gemäß den Fig. 5 bis 15 kann jeder Fuß 2 mehrere senkrecht nach unten ragende Hohlzylinder 3 aufweisen. Dementsprechend verteilt verfügen die Kufen 13 auch über mehrere Zapfen 14. Die Hohlzylinder 3 werden von senkrecht nach unten ragenden Versteifungsstegen 18 gebildet, die wie die Kammerwandungen bei der Ausführungsform der Palette gemäß den Fig. 1 bis 4 die Steifigkeit eines Fußes 2 gewährleisten und insgesamt eine gemeinsame, die Außenkontur des Fußes 2 ergebende, geschlossene Außenwandung 19 aufweisen. Vorzugsweise sind in jedem Fuß 2 vier Hohlzylinder 3 neben den Versteifungsstegen 18 angeordnet. Der Boden 3a, der Hohlzylinder 3 wird wie bei der Ausführungsform nach den Fig. 1 bis 4 von der Deckplatte 1 gebildet. Die Fußversteifungsstege 18 weisen die gleiche Länge wie die Hohlzylinder 3 auf (Fußlänge). Die Deckplattenversteifungsstege 10 sind dagegen kürzer ausgeführt.

Die in der Draufsicht betrachtet rechteckigen Kufen 13 weisen an ihrer Unterseite ebenfalls optimiert verteilt Kufenversteifungsstege 20 auf, die senkrecht nach unten ragen. Dabei ist eine rundumlaufende, die Kufe 13 seitlich abschließende Seitenwandung 21 vorgesehen.

Die Oberfläche 22 des Kufenbodens 13a ist geschlossenflächig ausgebildet. Von ihr stehen senkrecht nach oben ragend die Zapfen 14 ab, die ebenfalls als Hohlzylinder 23 mit Wandungen 23a ausgebildet sind. Der Boden 24 der Hohlzylinder 23 ist eben und befindet sich oben, d.h. die Öffnung 25 der Hohlzylinder liegt im Bereich der Kufenoberfläche 22.

Vorteilhaft ist, wenn zwischen den Füßen 2 zur Längsmitte 26 ansteigende Einführschrägen 27 an den Kufen 13 ausgebildet sind, die das Einführen der Gabeln von Gabelstaplern oder das Einfahren der Räder von Gabelhubwagen erleichtern. Außerdem ist zum gleichen Zweck vorteilhaft, die Füße 2 an den Ecken abgerundet oder abgeschrägt auszubilden (nicht dargestellt).

Nach einer besonderen Ausführungsform der Erfindung sind vorzugsweise sämtliche senkrecht aufeinanderstoßende Übergänge z.B. zwischen den Stegen bzw. Wandungen 6, 7, 10, 18, 19, 20, 21, 23a und den Böden 3a, 24 bzw. der Deckenplatte 1 oder dem Kufenboden 13a als Bögen 28 ausgeführt. Diese Ausführungsform erhöht die Festigkeit der Palette ganz erheblich und ist durch das Einpressen leicht zu erreichen.

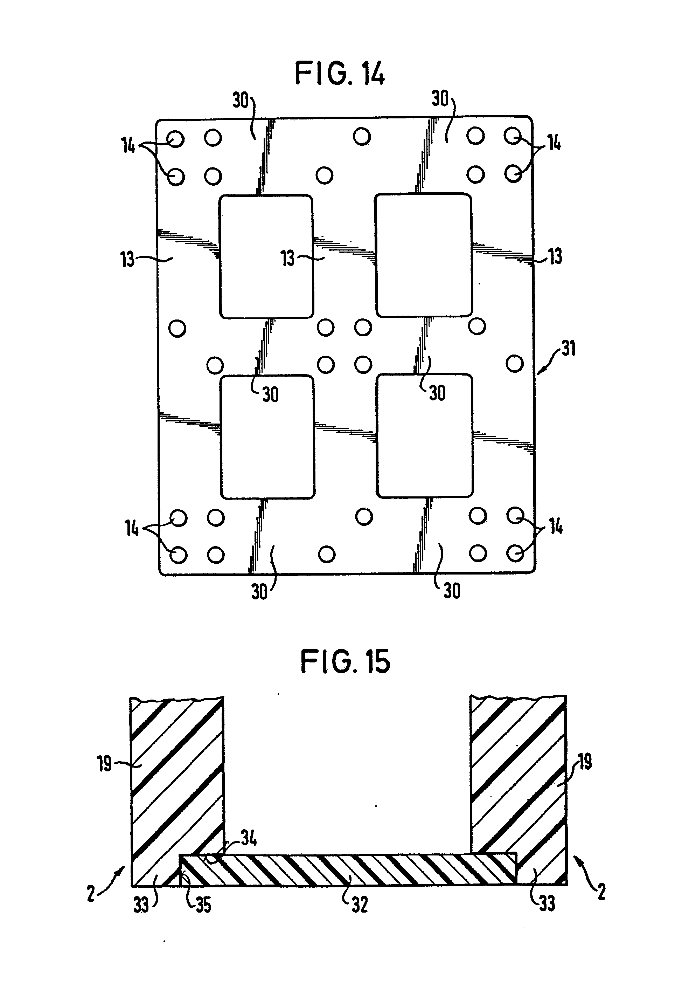

Fig. 14 zeigt einen Kufenrahmen 31, bei dem die Kufen 13 einstückig mit Verbindungsstegen 30 versehen sind und infolgedessen einen Kufenrahmen 31 bilden. Der Kufenrahmen 31 bewirkt eine hohe Verwindungssteifigkeit der Palette; die Palette eignet sich dann insbesondere zur Beladung mit Flaschenkästen.

Wenn für die Palette keine Kufen 13 oder kein Kufenrahmen 31 benutzt werden soll, sind ebene Abdeckplatten 32 aus Recycling-Kunststoff unter die Füße 2 gesetzt. Zweckmäßig ist, dafür die Wandungen 19 der Füße 2 mit einem schmalen umlaufenden Steg 33 zu versehen, der mit der Außenfläche der Wandungen 19 der Füße 2 fluchtet. Es resultiert daraus eine innere Auflagefläche 34 mit einer äußeren Begrenzungskante 35, so daß die Abdeckplatte 32 formschlüssig eingesetzt und befestigt sein kann. Letzteres kann durch einen Preßsitz oder durch Einkleben oder dgl. erfolgen. Wegen der besseren Übersicht sind in Fig. 15 die Hohlzylinder 3 und die Fußversteifungsstege 18 nicht mitabgebildet.

Die erfindungsgemäße Palette wird als Preßteil ausgebildet und besteht aus einem Recycling-Kunststoff. Dieses Material ist besonders preiswert, da es aus Altkunststoffgemischen aus Haushaltungen und gegebenenfalls Zusätzen von gewerblichen Altkunststoffen, jedoch in der Regel ohne jeglichen Zusatz von Neukunststoffmaterialien besteht. Der Energieaufwand zur Herstellung der Palette ist minimal, da die Altkunststoffteile nach einer einfachen Vorsichtung zur Ausscheidung von Störstoffen (Fremdkörper, teil-gefüllte Behälter) lediglich zerkleinert, gemahlen und in einem Walzenplastifikator durch Quetschen, Walken und Kneten unter wirksamer Entgasung materialschonend auf eine Plastifizierungstemperatur von vorzugsweise 160° bis 210°C erwärmt und innig vermischt werden. Durch gezielten Zusatz gewerblicher Altkunststoffe kann dabei die Zusammensetzung in gewünschter Weise beeinflußt werden. Es entsteht ein teigartiges Plastifikat, in dem die nicht plastifizierten Anteile und Verunreinigungen z.B. als körnige Bestandteile eingebettet sind. Auch Polyamide, die ebenfalls enthalten sein können, sind nicht plastifiziert, da die Plastifizierungstemperatur von Polyamiden etwa 250°C beträgt und somit über der Plastifizierungstemperatur des erfindungsgemäßen Recycling-Kunststoffes liegt. Aufgrund der Ausbildung als Preßteil kann die erfindungsgemäße Palette, sofern keine Kufen erforderlich sind, in einem Arbeitsgang hergestellt werden. Sind Kufen vorhanden, so werden diese in einem separaten Preßwerkzeug hergestellt und anschließend mit den Füßen verbunden. Die Zylinderform 14 der Füße ist vorzugsweise rund; sie kann aber auch eckig, z.B. drei-, vier-, sechs- oder achteckig, oder oval sein.

**Patentansprüche**

1. Palette zum Transport und Lagern von Gütern, bestehend aus einer Deckplatte aus Kunststoff und aus an deren Unterseite angeformten Füßen, wobei die Palette ein einstückiges Kunststoffteil ist und die Füße als Preßfortsätze der Deckplatte mit einem zur Fußunterseite offenen Hohlzylinder ausgebildet sind, dadurch gekennzeichnet, daß die Palette aus einem Recycling-Kunststoff aus einem Gemisch aus während der Herstellung plastifizierten thermoplastischen Kunststoffen mit nicht plastifizierten z.B. körnigen Bestandteilen wie Polyamide, Verunreinigungen und dgl. besteht, und daß der Hohlzylinder (3) der Füße (2) von Versteifungsstegen (5, 18) umgeben und von zueinander symmetrischen Kammern (4) umschlossen ist, die gegeneinander durch die Versteifungsstege (5, 18) getrennt voneinander sind.

2. Palette nach Anspruch 1, dadurch gekennzeichnet, daß die Füße (2) eine die Öffnung (9) des Hohlzylinders (3) umgebende geschlossene Standfläche besitzen.

3. Palette nach Anspruch 1 oder 2, dadurch gekennzeichnet, daß auf der Unterseite der Deckplatte (1) zur Palettenlängs- und Querseite parallel verlaufende und/oder schräg verlaufende, vorzugsweise sich kreuzende Versteifungsstege (10) ausgebildet sind.

4. Palette nach einem oder mehreren der Ansprüche 1 bis 3, dadurch gekennzeichnet, daß in der Deckplatte (1) Grifföffnungen (11) vorhanden sind.

5. Palette nach einem oder mehreren der Ansprüche 1 bis 4, dadurch gekennzeichnet, daß das Kunststoffmaterial geschäumt ist.

6. Palette nach einem oder mehreren der Ansprüche 1 bis 5, dadurch gekennzeichnet, daß auf der Unterseite der Füße (2) Kufen (13) befestigt sind.

7. Palette nach Anspruch 6, dadurch gekennzeichnet, daß die Kufen (13) mit an ihnen ausgebildeten einstückigen Zapfen (14) in den Hohlzylindern (3) der Füße (2) befestigt sind, wobei die Zapfen (14) vorungsweise eingepreßt oder eingeldabt sind.

8. Palette nach einem oder mehreren der Ansprüche 1 bis 7, dadurch gekennzeichnet, daß die Deckplatte (1) ebenflächig durchgehend ausgeführt ist.

9. Palette nach einem oder mehreren der Ansprüche 1 bis 8, dadurch gekennzeichnet, daß auf der Oberfläche der Deckplatte (1) Noppen (15) oder dgl. reliefartige Erhebungen angeordnet, insbesondere eingepreßt sind.

10. Palette nach einem oder mehreren der Ansprüche 1 bis 9, dadurch gekennzeichnet, daß Rillen (16) im Bereich der Außenkanten der Palette im Oberflächenbereich der Deckplatte (1) eingebracht sind, in denen eine Leiste (17) aus insbesondere einem vorzugsweise elastischen Material sitzt, das zum Ladungsgut einen hohen Reibungskoeffizienten aufweist.

11. Palette nach einem oder mehreren der Ansprüche 6 bis 10, dadurch gekennzeichnet, daß jeder Fuß (2) mehrere senkrecht nach unten ragende Hohlzylinder (3) aufweist, wobei die Kufen (13) über entsprechend mehrere Zapfen (14) verfügen.

12. Palette nach einem oder mehreren der Ansprüche 8 bis 11, dadurch gekennzeichnet, daß die Hohlzylinder (3) von senkrecht nach unten ragenden Versteifungsstegen (18) gebildet werden, die insgesamt eine gemeinsame, die Außenkontur des Fußes (2) ergebende geschlossene Außenwandung (19) aufweisen.

13. Palette nach einem oder mehreren der Ansprüche 1 bis 12, dadurch gekennzeichnet, daß der Boden (3a) der Hohlzylinder (3) von der Deckplatte (1) gebildet wird.

14. Palette nach Anspruch 12 oder 13, dadurch gekennzeichnet, daß die Fußversteifungsstege (18) die gleiche Länge wie die Hohlzylinder (3) aufweisen und daß die Deckplattenversteifungsstege (10) kürzer ausgeführt sind.

15. Palette nach einem oder mehreren der Ansprüche 6 bis 14, dadurch gekennzeichnet, daß die Kufen (13) rechteckig ausgeführt sind und an ihrer Unterseite Kufenversteifungsstege (20) aufweisen, die senkrecht nach unten ragen und mit einer rundumlaufenden, die Kufe (13) seitlich abschließende Seitenwandung (21) in Verbindung stehen.

16. Palette nach einem oder mehreren der Ansprüche 6 bis 15, dadurch gekennzeichnet, daß die Oberfläche (22) des Kufenbodens (13a) geschlossenflächig ausgebildet ist und daß von der Oberfläche (22) senkrecht nach oben ragend die Zapfen (14) abstehen, die als Hohlzylinder (23) mit Wandungen (23a) ausgebildet sind, wobei der Boden (24) der Hohlzylinder (23) eben ist und sich oben befindet und die Öffnung (25) der Hohlzylinder im Bereich der Kufenoberfläche (22) liegt.

17. Palette nach einem oder mehreren der Ansprüche 6 bis 16, dadurch gekennzeichnet, daß zwischen den Füßen (2) zur Längsmitte (25) ansteigende Einführungsschrägen (27) an den Kufen (13) ausgebildet sind.

18. Palette nach einem oder mehreren der Ansprüche 1 bis 17, dadurch gekennzeichnet, daß die Füße (2) an den Ecken abgerundet oder abgeschrägt ausgebildet sind.

19. Palette nach einem oder mehreren der Ansprüche 1 bis 18, dadurch gekennzeichnet, daß senkrecht aufeinanderstoßende Übergänge zwischen Stegen bzw. Wandungen und Böden bzw. der Deckplatte oder dem Kufenboden als Bögen (28) ausgeführt sind.

20. Palette nach einem oder mehreren der Ansprüche 6 bis 19, dadurch gekennzeichnet, daß die Kufen einen Kufenrahmen (31) bilden, bei dem die Kufen (13) einstückig mit Verbindungsstegen (30) versehen sind.

21. Palette nach einem oder mehreren der Ansprüche 1 bis 20, gekennzeichnet durch Abdeckplatten (32) aus Recycling-Kunststoff, die unter die Füße (2) setzbar sind.

22. Palette nach Anspruch 21, dadurch gekennzeichnet, daß die Wandungen (19) der Füße (2) mit einem schmalen umlaufenden Steg (33) versehen sind, der mit der Außenfläche der Wandungen (19) der Füße (2) fluchtet, woraus eine innere Auflagefläche (34) mit einer äußeren Begrenzungskante (35) resultieren, so daß die Abdeckplatte (32) formschlüssig eingesetzt und befestigt werden kann.

**Revendications**

1. Palette pour le transport et le stockage de produits, constituée d'un plateau de recouvrement en matière plastique et de pieds moulés sur la face inférieure de cette dernière, la palette étant une pièce monobloc en matière plastique et les pieds étant réalisés sous la forme de prolongements comportant un cylindre creux ouvert vers la face inférieure du pied et obtenus par formage par pression de la plaque supérieure, caractérisée en ce que la palette est constituée d'une matière plastique de recyclage composée à partir d'un mélange de matières plastiques thermoplastiques plastifiées pendant la fabrication, comportant des constituants non plastifiés, par exemple en grains, comme du polyamide, des impuretés et des produits similaires, et en ce que le cylindre creux (3) des pieds (2) est entouré par des nervures de raidissement (5, 18) et par des chambres (4) symétriques les unes par rapport aux autres, qui sont séparées entre elles, en face les unes des autres, au moyen des nervures de raidissement (5, 18).

2. Palette suivant la revendication 1, caractérisée en ce que les pieds (2) possèdent une surface d'appui fermée entourant l'ouverture (9) du cylindre creux (3).

3. Palette suivant la revendication 1 ou la revendication 2, caractérisée en ce que, sur la face inférieure du plateau de recouvrement (1), sont réalisées des nervures de raidissement (10) disposées parallèlement aux faces longitudinales et transversales et/ou obliquement, de préférence en se croisant.

4. Palette suivant l'une quelconque ou plusieurs des revendications 1 à 3, caractérisée en ce que, dans le plateau de recouvrement (1), sont disposées des ouvertures formant poignées (11).

5. Palette suivant l'une quelconque ou plusieurs des revendications 1 à 4, caractérisée en ce que la matière plastique se présente sous forme de mousse.

6. Palette suivant l'une quelconque ou plusieurs des revendications 1 à 5, caractérisée en ce que, sur la face inférieure des pieds (2), sont fixés des patins (13).

7. Palette suivant la revendication 6, caractérisée en ce que les patins (13), comportant des tourillons (14) réalisés de façon monobloc sur eux, sont fixés dans les cylindres creux (3) des pieds (2), les tourillons (14) étant de préférence réalisés par formage sous pression ou par collage.

8. Palette suivant l'une quelconque ou plusieurs des revendications 1 à 7, caractérisée en ce que le plateau de recouvrement (1) est réalisé sous la forme d'une surface plane et continue.

9. Palette suivant l'une quelconque ou plusieurs des revendications 1 à 8, caractérisée en ce que, sur la surface supérieure du plateau de recouvrement (1), sont disposés des bourrelets (15), ou des surépaisseurs similaires, en relief, réalisées en particulier par formage sous pression.

10. Palette suivant l'une quelconque ou plusieurs des revendications 1 à 9, caractérisée en ce que des nervures (16) sont rapportées dans la zone des arêtes externes de la palette, dans la zone de la surface supérieure du plateau de recouvrement (1), nervures dans lesquelles se trouve une baguette (17) constituée, en particulier, d'un matériau de préférence élastique, qui présente un coefficient de frottement élevé dans son contact avec la charge.

11. Palette suivant l'une quelconque ou plusieurs des revendications 6 à 10, caractérisée en ce que chaque pied (2) présente plusieurs cylindres creux (3) dépassant verticalement vers le bas, les patins (13) disposant de plusieurs tourillons (14) correspondant.

12. Palette suivant l'une quelconque ou plusieurs des revendications 8 à 11, caractérisée en ce que les cylindres creux (3) sont formés de nervures de raidissement (18) dépassant verticalement vers le bas, qui, ensemble, présentent un revêtement extérieur (19) fermé commun, constituant le contour extérieur du pied (2).

13. Palette suivant l'une quelconque ou plusieurs des revendications 1 à 12, caractérisée en ce que le fond (3a) des cylindres creux (3) est formé par le plateau de recouvrement (1).

14. Palette suivant la revendication 12 ou la revendication 13, caractérisée en ce que les nervures de raidissement (18) présentent la même longueur que les cylindres creux (3) et en ce que les nervures de raidissement (10) sont réalisées plus courtes.

15. Palette suivant l'une quelconque ou plusieurs des revendications 6 à 14, caractérisée en ce que les patins (13) sont réalisés rectangulaires et présentent sur leur face inférieure des nervures de raidissement des patins (20) qui dépassent verticalement vers le bas, et qui se raccordent à une paroi latérale (21) périphérique, enfermant latéralement le patin (13).

16. Palette suivant l'une quelconque ou plusieurs des revendications 6 à 15, caractérisée en ce que la surface supérieure (22) de la semelle (13a) du patin est réalisée en formant une surface fermée et en ce que les tourillons (14), qui sont réalisés en forme de cylindres creux (23), partent de la surface supérieure (22) en dépassant verticalement vers le haut, tandis que le fond (24) des cylindres creux (23) est plan et situé en haut, et que l'ouverture (25) des cylindres creux se trouve dans la zone de la surface supérieure (22) du patin.

17. Palette suivant l'une quelconque ou plusieurs des revendications 6 à 16, caractérisée en ce qu'entre les pieds (2), sont réalisés, sur les patins (13), des biseaux d'introduction (27), montant vers l'axe longitudinal (25) du patin.

18. Palette suivant l'une quelconque ou plusieurs des revendications 1 à 17, caractérisée en ce que les pieds (2) sont réalisés arrondis ou biseautés sur leurs angles.

19. Palette suivant l'une quelconque ou plusieurs des revendications 1 à 18, caractérisée en ce que des zones de transition, butant verticalement les unes sur les autres, entre les nervures ou les parois et les semelles ou le plateau de recouvrement, ou la semelle du patin, sont réalisées en forme d'arcs (28).

20. Palette suivant l'une quelconque ou plusieurs des revendications 6 à 19, caractérisée en ce que les patins forment un cadre (31), dans le cas duquel les patins (13) sont équipés, de façon monobloc, de nervures de renfort (30).

21. Palette suivant l'une quelconque ou plusieurs des revendications 1 à 20, caractérisée par des plaques de recouvrement (32) en matière plastique recyclée, qui peuvent être placées sous les pieds (2).

22. Palette suivant la revendication 21, caractérisée en ce que les parois (19) des pieds (2) sont munies d'une nervure périphérique étroite (33) qui s'aligne avec la surface extérieure des parois (19) des pieds (2), d'où il en résulte une surface d'appui intérieure (34) comportant une arête limite extérieure (35), de telle façon que la plaque de recouvrement (32) peut être emboîtée et fixée de façon positive.

## Claims

1. Pallet for the transport and storage of goods, consisting of a cover plate of plastics material and of feet formed on the underside thereof, the pallet being a plastics material part formed in one piece and the feet being formed as pressed extensions of the cover plate with a hollow cylinder open towards the lower side of the foot, characterised in that the pallet consists of a recycling plastics material of a mixture of thermoplastic plastics materials plasticized during production and non-plasticized, for example granular, components such as polyamids, impurities and the like; and in that the hollow cylinder (3) of the feet (2) is surrounded by reinforcing bars (5, 18) and is enclosed by chambers (4) which are symmetrical with respect to one another and are separated from one another by the reinforcing bars (5, 18).

2. Pallet according to Claim 1, characterised in that the feet (2) have a closed base surrounding the opening (9) of the hollow cylinder (3).

3. Pallet according to Claim 1 or 2, characterised in that preferably intersecting reinforcing bars (10) are formed on the underside of the cover plate 1 and extend parallel to the longitudinal and transverse sides of the pallet and/or obliquely.

4. Pallet according to one or more of Claims 1 to 3, characterised in that handle openings (11) are provided in the cover plate (1).

5. Pallet according to one or more of Claims 1 to 4, characterised in that the plastics material is foamed.

6. Pallet according to one or more of Claims 1 to 5, characterised in that runners (13) are secured on the lower side of the feet (2).

7. Pallet according to Claim 6, characterised in that the runners (13) are secured in the hollow cylinders (3) of the feet (2) by means of one-piece lugs (14) formed thereon, the lugs (14) preferably being pressed in or glued in.

8. Pallet according to one or more of Claims 1 to 7, characterised in that the cover plate (1) is constructed in such a way that it has a continuously plane surface.

9. Pallet according to one or more of Claims 1 to 8, characterised in that on the surface of the cover plate (1) knubs (15) or a similar type of relief-like elevations are disposed, in particular pressed in.

10. Pallet according to one or more of Claims 1 to 9, characterised in that grooves (16) are provided in the area of the outer edges of the pallet in the surface area of the cover plate (1), in which grooves there is located a strip (17) in particular of a preferably resilient material which has a high friction co-efficient with respect to the charge material.

11. Pallet according to one or more of Claims 6 to 10, characterised in that each foot (2) comprises a plurality of hollow cylinders (3) projecting vertically downwards, the runners (13) having a corresponding number of lugs (14).

12. Pallet according to one or more of Claims 8 to 11, characterised in that the hollow cylinders (3) are formed by reinforcing bars (18) projecting vertically downwards and comprising in all a common closed outer wall (19) forming the outer contour of the foot (2).

13. Pallet according to one or more of Claims 1 to 12, characterised in that the base (3a) of the hollow cylinders (3) is formed by the cover plate (1).

14. Pallet according to Claim 12 or 13, characterised in that the foot reinforcing bars (18) are the same length as the hollow cylinders (3); and in that the cover plate reinforcing bars (10) are shorter.

15. Pallet according to one or more of Claims 6 to 14, characterised in that the runners (13) are formed in a rectangular manner and comprise on their lower side runner reinforcing bars (20) which project vertically downwards and are connected to a peripheral side wall (21) which terminates the runners (13) laterally.

16. Pallet according to one or more of Claims 6 to 15, characterised in that the surface (22) of the runner base (13a) is formed in the manner of a closed surface; and in that the lugs (14) project vertically upwards from the surface (22) and are formed as hollow cylinders (23) with walls (23a), the base (24) of the hollow cylinders (23) being flat and located at the top and the opening (25) of the hollow cylinders lying in the vicinity of the runner surface (22).

17. Pallet according to one or more of Claims 6 to 16, characterised in that insertion slopes (27), rising towards the longitudinal centre (25), are formed on the runners (13) between the feet (2).

18. Pallet according to one or more of Claims 1 to 17, characterised in that the feet (2) are formed such that they are rounded or bevelled at the corners.

19. Pallet according to one or more of Claims 1 to 18, characterised in that passages which meet one another in a perpendicular manner are formed as arcs (28) between bars and walls and bases or the cover plate or the runner base.

20. Pallet according to one or more of Claims 6 to 19, characterised in that the runners form a runner frame (31) in the case of which the runners (13) are provided in one piece with connecting bars (30).

21. Pallet according to one or more of Claims 1 to 20, characterised by cover plates (32) of recycling plastics material which can be placed under the feet (2).

22. Pallet according to Claim 21, characterised in that the walls (19) of the feet (2) are provided with a narrow peripheral bar (33) which is aligned with the outer surface of the walls (19) of the feet (2), resulting in an inner bearing surface (34) with an outer limiting edge (35), such that the cover plate (32) can be inserted and secured in a positive locking manner.

FIG.1

FIG.2

FIG.3

FIG.4

EP 0 227 033 B1

FIG. 5

FIG. 6

FIG. 7

## FIG. 8

## FIG. 9

EP 0 227 033 B1

FIG. 10

FIG. 11

FIG. 12

FIG. 13

EP 0 227 033 B1

## FIG. 14

## FIG. 15